# NEUE EUROPÄISCHE PATENTSCHRIFT

(11) **EP 1 660 566 B2**
(45) Veröffentlichungstag und Bekanntmachung des Hinweises auf die Entscheidung über den Einspruch: **21.06.2017**
(45) Hinweis auf die Patenterteilung: 14.05.2008
(21) Anmeldenummer: 05728203.0
(22) Anmeldetag: 21.03.2005
(51) Int. Cl.: C08J 3/12, C08G 65/40, C08G 67/00, B29B 9/14, B29B 13/00, B29B 13/10, B29C 67/00, B29K 105/16, C08J 3/20

(54) **PULVER FÜR DAS RAPID PROTOTYPING UND VERFAHREN ZU DESSEN HERSTELLUNG**
POWDER FOR RAPID PROTOTYPING AND ASSOCIATED PRODUCTION METHOD
POUDRE POUR PROTOTYPAGE RAPIDE ET PROCEDE POUR LA PREPARER

(30) Priorität: 21.03.2004 WO PCT/EP2004/002965
(43) Veröffentlichungstag der Anmeldung: 31.05.2006
(73) Patentinhaber: EOS GmbH Electro Optical Systems, 82152 Krailling (DE)
(72) Erfinder: HESSE, Peter, 50858 Köln (DE); PAUL, Tillmann, 50858 Köln (DE); WEISS, Richard, 50858 Köln (DE)
(74) Vertreter: Prüfer & Partner mbB Patentanwälte · Rechtsanwälte
(86) Internationale Anmeldenummer: PCT/EP2005/002991
(87) Internationale Veröffentlichungsnummer: WO 2005/090449

(56) Entgegenhaltungen:
- EP-A- 0 377 170
- EP-A- 1 170 318
- EP-A1- 0 026 806
- EP-A1- 1 571 173
- EP-B1- 0 196 972
- EP-B1- 0 879 137
- EP-B1- 1 571 173
- WO-A-94/15999
- WO-A1-00/58389
- DE-A1- 4 301 543
- DE-A1- 10 129 305
- FR-A- 1 525 016
- GB-A- 1 147 052
- US-A- 5 247 052
- US-A- 5 357 040
- US-A- 5 357 040
- US-A- 5 733 497
- US-A- 5 910 558
- US-A1- 2001 050 031
- US-A1- 2002 053 257
- US-A1- 2002 149 137
- Brochure commerciale "Duraform PA et GF, Matériaux pour systèmes SLS", 2001
- DOMININGHAUS H.: 'Die Kunststoffe und ihre Eigenschaften', 1976, VDI-VERLAG, DÜSSELDORF Seiten 270 - 275
- CADLE R.D.: 'Particle Size Determination', 1955, INTERSCIENCE PUBLISHERS, INC., NEW YORK Seiten 92 - 101
- KIRK-OTHMER: 'Encyclopedia of Chemical Technology', JOHN WILEY & SONS, INC vol. 'Particle Size Measurement', Seiten 1 - 27
- GEBHARDT A.: 'Rapid Prototyping', 1996, CARL HANSER VERLAG, MÜNCHEN Seiten 287+ - 294
- EMS-Grivory, "Presse Information" vom 25.11.2011 zum Thema "Neue Iangkettige Polyamide von EMS-Grivory"
- Firmenschrift Du Pont 10/08 "Du Pont Zytel Long Chain and Zytel RS" Long Chain Polyamides"
- 23d World Gas Conference, Amsterdam 2006, "Polyamide 12 for high Pressure Gas Installations"

## Beschreibung

Die Erfindung betrifft allgemein die Herstellung von räumlichen, insbesondere von räumlich komplexen Strukturen bzw. Formkörpern mittels schichtaufbauender Verfahren, wie sie auch unter dem Begriff "pulverbasiertes generative rapid prototyping" oder "solid free from fabrication (SFF) Verfahren bekannt sind. Solche pulverbasierte generative rapid prototyping Verfahren sind beispielsweise unter den Bezeichnungen 3D-Lasersintern, 3D-Laserschmelzen oder 3D-Drucken bekannt.

Die Erfindung bezieht sich im Besonderen auf ein Pulver zur Verwendung in einem solchen Verfahren, sowie auf Verfahren zur wirtschaftlichen Herstellung eines solchen Pulvers.

Heute bekannte, in der Regel computergesteuerte additive, automatische Verfahren zur Herstellung von Formkörpern komplexer Struktur arbeiten mit Schüttungen aus pulvrigen Werkstoffen, die schichtweise an bestimmten Stellen bzw. Bereichen so weit erhitzt werden, dass ein Aufschmelz- bzw. Versinterungsprozess stattfindet. Zum Heizen wird in der Regel ein vorzugsweise programmgesteuerter Laserstrahl oder - bei Verwendung metallischer Pulver-Werkstoffe - ein energiereicher Elektronenstrahl verwendet.

Inzwischen sind verschiedene Pulver für diese Technologie entwickelt worden, wobei diesbezüglich beispielsweise auf die Dokumente DE 101 22 492 A1 , EP 0 968 080 B1, WO 03/106146 A1 oder DE 197 47 309 A1 im Bereich der Kunststoffpulver oder auf die WO 02/11928 A1 im Bereich der metallischen Pulver verwiesen werden kann.

Damit der Formgebungsprozess problemlos mit hoher Prozessstabilität durchgeführt werden kann, benötigt man Pulverteilchen, die sich durch ein besonders gutes "Fließverhalten" beim Auftragen der Pulverschicht auszeichnen, was dadurch sichergestellt wird, dass die Pulverteilchen möglichst kugelförmig mit möglichst glatter Oberfläche ausgebildet werden.

Bislang hat sich im Besonderen der Werkstoff Polyamid, insbesondere ein längerkettiges Polyamid, wie PA 11 oder PA 12 für das eingangs beschriebene Verfahren durchgesetzt.

Allerdings bleibt mit diesem Pulvermaterial das Einsatzspektrum der damit hergestellten Formkörper beschränkt. Man hat deshalb bereits verschiedentlich versucht, die Pulver zu modifizieren, um die mechanischen Eigenschaften des Formkörpers zu verbessern. Ein Ansatz wurde darin gesehen, das Thermoplast-Pulver mit Glaskügelchen oder mit Aluminium-Flocken zu versetzen.

Mit den Glaskügelchen bleibt zwar eine gute Fließfähigkeit erhalten, aber die erzielbaren Verbesserungen der mechanischen Eigenschaften sind begrenzt. Es ist zwar eine Versteifung des Materials möglich (Steigerung des E-Moduls), aber die Zugfestigkeit lässt sich nicht nennenswert steigern, und die erzielbaren Verbesserungen müssen mit einer Versprödung des Materials erkauft werden. Noch stärker ausgeprägt ist diese Problematik bei Verwendung der Aluminium-Flocken.

Aus dem Stand der Technik (Dokument DE 100 55 465 A1 und Freeform Fabriction Proceedings: September 1995, S. 287 bis 297; Paul Forderhase et al: "The Development of a SLS Composite Material ") sind zwar auch Ansätze bekannt, Pulver mit Füllstoffpartikeln in Form von Fasern für die eingangs beschriebene Technologie einzusetzen, wobei das Dokument DE 100 55 465 A1 die Verwendung von Polyetherketon (PEEK)- Werkstoffen erwähnt.

Der Erfindung liegt deshalb die Aufgabe zugrunde, das Verfahren zur Herstellung von Formkörpern durch selektives Sintern oder Schmelzen von pulverförmigen Materialien so zu verbessern, dass unter Beibehaltung der grundsätzlichen Konzeption der Maschine und mit einem gut beherrschbaren Herstellungsverfahren Formkörper mit wesentlich verbesserten mechanischen Eigenschaften herstellbar sind.

Diese Aufgabe wird durch ein neues Pulver nach den Ansprüchen 1, 3 und 11, sowie durch die Verfahren zur Herstellung derartiger Pulver nach den Ansprüchen 22, 23, 33 und 40 gelöst.

Gemäß einem Aspekt der Erfindung wird ein Pulver bereitgestellt, mit einem ersten in Form von im Wesentlichen sphärischen Pulverteichen vorliegenden Anteil, der von einem Matrix-Werkstoff gebildet ist, und zumindest einem weiteren Anteil in Form von versteifenden und/oder verstärkenden Fasern. Der Matrix-Werkstoff kann dabei ein Kunststoff oder ein Metall sein. Es wurde durch Untersuchungen festgestellt, dass sich dann, wenn der Volumenanteil der Fasern - abhängig von der Faserlängenverteilung - beschränkt bleibt, beispielsweise auf maximal 25%, vorzugsweise auf bis zu 15%, besonders bevorzugt auf bis zu 10%, die Fließfähigkeit des Pulvers gut beherrschen lässt. Die Versuchsergebnisse zeigen, dass sich mit PA12 als Matrix-Material bereits mit 10 Vol% Faseranteil (Carbonfasern) eine dreifache Steifigkeit und eine 50%ige Erhöhung der Zugfestigkeit ergibt.

Zur weiteren Verbesserung der mechanischen Eigenschaften ist der Faseranteil zu vergrößern. Erfindungsgemäß wird das Pulver mit höherem Faservolumenanteil unter Heranziehung der Herstellungsverfahren nach den Ansprüchen 22, 23, 33 bzw. 40 hergestellt, wodurch es gelingt die Fasern in den Matrix-Werkstoff einzubetten, und zwar vorzugsweise derart, dass sie im Wesentlichen vollständig vom Matrix-Werkstoff umschlossen sind. Auf diese Weise bleibt das Handling des Pulvers weitgehend unbeeinflusst vom Volumenanteil des Fasermaterials. Es kann mit PA12 als Matrix-Material und mit einem Volumenanteil der Carbonfasern von 30% eine Steigerung der Zugfestigkeit um 300% und eine Steigerung des E-Moduls um den Faktor 9 erzielt werden.

Wenn als Matrix-Werkstoff ein thermoplastischer Kunststoff verwendet wird, können erhebliche Verbesserungen der mechanischen Eigenschaften gegenüber dem unverstärkten. Material schon dann erzielt werden, wenn anstelle der Fasern Flocken verwendet werden, solange deren Abmessungen eine vorzugsweise vollständige Einbettung in die Pulverteilchen zulassen. Dieser Aspekt wird ausdrücklich in den Gegenstand der Erfindung einbezogen.

Wenn der Matrix-Werkstoff von einem Kunststoffwerkstoff gebildet ist, wählt man die Fasern vorzugsweise aus der Gruppe der Carbon- und/oder Glasfasern aus.

Grundsätzlich kann das Pulver in allen bislang verarbeiteten Qualitäten hergestellt sein, wobei die Pulverteilchen einen mittleren Durchmesser d50 im Bereich von 20 bis 150, vorzugsweise von 40 bis 70 µm haben können. Die Breite der Korngrößenverteilung sollte möglichst eng sein, damit die Fließfähigkeit nicht zu stark beeinträchtigt wird.

Gemäß einer vorteilhaften Weiterbildung können die im Wesentlichen sphärischen Pulverteichen von einem aromatischen Polyetherketon, insbesondere einem Polyaryletherketon (PEEK)-Kunststoff mit der Repetiereinheit OXy-1,4-Phenylen-Oxy-1,4-Phenylen-Carbonyl-1,4-Phenylen nach folgender Formel: 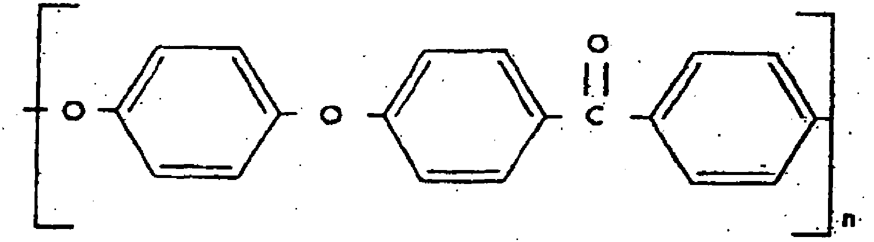 Gebildet sein.

Dieses lineare, aromatische Polymer, das unter der Bezeichnung "PEEK" von der Firma Victrex vermarktet wird, ist in der Regel semikristallin und zeichnet sich durch physikalische Eigenschaften, aus, die den bislang beim Selektiven Laser-Sintern eingesetzten Werkstoffen in jeder Beziehung weit überlegen sind. Nicht nur die mechanischen Eigenschaften, wie Zugfestigkeit und E-Modul sind um ein Vielfaches besser als bei herkömmlichen PA-Pulvern. Es kommt hinzu, dass die thermische Stabilität dieses Werkstoffs so gut ist, dass die aus diesem Werkstoff nach dem Verfahren des selektiven Laser-Sintern hergestellten Bauteile sogar dort eingesetzt werden können, wo bislang selbst faserverstärkte Kunststoffe überfordert waren.

Die Erfinder haben außerdem erkannt, dass dieses Material unter Heranziehung eines geeigneten Verfahrens, insbesondere durch die Verfahren der Ansprüche 22, 33 oder 40 zu weitestgehend glatten und kugelförmigen Pulverpartikeln verarbeitbar ist, die somit eine ausreichend gute Fließfähigkeit des Pulvers garantieren, damit die einzelnen Schichten mit größtmöglicher Präzision aufgetragen werden können. Dabei wird die Erfindung ergänzend von der Idee getragen, das sogenannte PEEK-Pulver vorzugsweise in einem sogenannten "isothermen" Laser-Sinter-Prozess zu verarbeiten, bei dem die Oberfläche der Pulverschüttung auf einer Temperatur gehalten wird, welche um einige wenige Grad unterhalb der relativ hohen Schmelztemperatur des PEEK-Pulvers liegt, und auch die restliche Pulverschüttung beheizt wird, diese Temperatur aber meistens unterhalb der Temperatur der Oberfläche der Pulverschüttung liegt.

Der Matrix-Werkstoff kann allerdings auch von einem metallischen Werkstoff gebildet sein. An den Herstellungsverfahren der Pulverteilchen mit eingebetteten Fasern nach den Ansprüchen 23 bzw. 40 ändert sich grundsätzlich nichts.

Ein metallisches Matrix-Material wird vorzugsweise mit Fasern aus der Gruppe der Keramik- und der Borfasern kombiniert.

In diesem Fall beträgt vorteilhafter Weise die mittlere Korngröße d50 der sphärischen Pulverteilchen zwischen 10 und 100, vorzugsweise zwischen 10 und 80 µm. Mit dem Wert d50 ist dasjenige Maß der Korngröße gemeint, das von 50% der Pulverteilchen unter- und von 50% der Pulverteilchen überschritten wird.

Die Faserlängenverteilung wird so gewählt, dass ein möglichst geringer Prozentsatz der Fasern aus der Oberfläche der beim Schmelzsprühen oder Sprühtrocknen entstehenden Partikel herausragen. Dies kann z.B. dadurch erreicht werden, dass die mittlere Länge L50 der Fasern maximal dem Wert der mittleren Korngröße d50 der sphärischen Pulverteilchen entspricht.

Ein erstes vorteilhaftes Verfahren zur Herstellung eines Pulvers, insbesondere nach einem der Ansprüche 1 bis 17, ist Gegenstand des Anspruchs 22. Mit diesem Verfahren lassen sich in Abhängigkeit von den veränderbaren Prozessparametern im Wesentlichen sphärische Pulverteilchen erzeugen, die sich zwar aus einer Vielzahl kleinerer Partikel zusammensetzen, jedoch eine ausreichend sphärische und glatte Oberfläche aufweisen, um bei rapid prototyping Verfahren problemlos verwendet werden zu können.

Dieses Verfahren kann gleichermaßen vorteilhaft in Anwesenheit einer zweiten Phase in Form einer versteifenden oder verstärkenden Faser durchgeführt werden. Als flüssige Phase der Suspension kommen alle Flüssigkeiten in Betracht, die eine gleichmäßige Verteilung der Mikropulver-Partikel und optional der verstärkenden Phase erlauben. Ein weiterer relevanter Aspekt bei der Auswahl der Flüssigkeit ist die Eigenschaft, dass sie schnell und rückstandslos verdampft oder verdunstet.

Vorzugsweise wird bei diesem Verfahren, soweit der Matrix-Werkstoff aus der Gruppe der Thermoplaste gewählt ist, Mikropulver mit einer mittleren Korngröße d50 zwischen 3 und 10µm, vorzugsweise 5µm und optional Fasern, vorzugsweise mit einer mittleren Länge L50 von 20 bis 150 µm, vorzugsweise von 40 bis 70 µm verwendet. Der Wert L50 bezeichnet diejenige Länge, die von 50% der Fasern über- und von 50% der Fasern unterschritten wird.

Für den Matrix-Werkstoff Metall gibt Anspruch 20 vorteilhafte Abmessungen der Teilchen an.

Ein alternatives Verfahren zur Herstellung des erfindungsgemäßen Pulvers ist Gegenstand des Anspruchs33. Es ist hauptsächlich für thermoplastische Werkstoffe interessant, jedoch grundsätzlich auch für metallische Materialien anwendbar. Der Schritt des Kühlens ist bei thermoplastischen Werkstoffen unabdingbar, damit das Material so weit versprödet wird, dass es mahlbar ist. Vorteilhafter Weise erfolgt das Kühlen mittels flüssigem Stickstoff. Weitere vorteilhafte Ausgestaltungen dieses Verfahrens sind Gegenstand der Ansprüche 34 bis 39.

Weitere Alternativen des Herstellungsverfahrens sind das sogenannte "Prillen" gemäß Anspruch 40 oder das Schmelzsprühen gemäß Anspruch 41, welches ebenfalls für metallische und thermoplastische Materialien anwendbar ist.

Das Überführen des Matrix-Werkstoffs, wie z.B. eines Thermoplasten, in die flüssige Phase kann beispielsweise durch Verwendung eines Lösungsmittels erfolgen. Die Verfestigung der Tröpfchen kann beispielsweise dadurch vorgenommen werden, dass das Lösungsmittel in den gasförmigen Aggregatzustand überführt wird. Dies kann beispielsweise durch Verdampfen oder Verdunsten geschehen. Dabei kann die den Tröpfchen entzogene Verdampfungsenergie zur Beschleunigung der Verfestigung herangezogen werden. Ergänzend kann aktiv geheizt werden.

Wichtige Prozessparameter zur Einstellung der gewünschten Korngrößenverteilung sind: Temperatur der flüssigen Phase bzw. der Schmelze; Viskosität und Oberflächenspannung der flüssigen Phase bzw. der Schmelze; Düsendurchmesser; Geschwindigkeit, Volumenstrom, Druck und Temperatur des Gasstroms.

Beim Schmelzsprühen nach Anspruch 41 erfolgt die Zerstäubung der Schmelze vorzugsweise in einem Heißgasstrahl.

Mit dem erfindungsgemäßen Pulver, das unter Verwendung eines erfindungsgemäßen Verfahrens herstellbar ist, lässt sich der Anwendungsbereich von Bauteilen oder Formteilen, die mittels schichtaufbauender Verfahren (pulverbasierter generative rapid prototyping Verfahren), wie z.B. nach der SLS (selektives Laser-Sintern)- oder der Laser-Schmelz-Technologie, generiert worden sind, deutlich erweitern. Mit der Erfindung kann somit erstmals ein derartiges schichtaufbauendes Verfahren sinnvoll zur Herstellung von hohlen Formkörpern mit innenliegenden, vorzugsweise dreidimensionalen fachwerkartigen Verstrebungen herangezogen werden. Denn bislang waren die mechanischen Eigenschaften des Materials so gering, dass selbst mit versteifenden Strukturen eine Anwendung in thermisch und/oder mechanisch anspruchsvollen Bereichen nicht möglich war.

Nachstehend wird die Erfindung anhand von Ausführungsbeispielen näher erläutert:

Es zeigen:
Figur 1 eine Prinzipskizze zur Darstellung des Funktionsprinzips des schichtaufbauenden Verfahrens;
Figur 2 die Einzelheit II in Figur 1 ;
Figur 3 die schematische Darstellung eines Verfahrens zur Herstellung des Pulvers nach einer ersten Ausführungsform;
Figur 4 eine schematische Ansicht eines Pulvers gemäß einer weiteren Ausführungsform der Erfindung;
Figur 5 eine schematische Ansicht eines Pulvers gemäß einer weiteren Variante der Erfindung;
Figur 6 die schematische Darstellung eines Verfahrens zur Herstellung des Pulvers nach Figur 5 entsprechend einer Ausführungsform;
Figur 7 die schematische Darstellung eines anderen Verfahrens zur Herstellung des Pulvers nach Figur 5 ;
Figur 8 die schematische Ansicht eines Ausschnitts eines Bauteils, welches unter Verwendung des erfindungsgemäßen Pulvers herstellbar ist; und
Figur 8A die Einzelheit VIII in Figur 8.

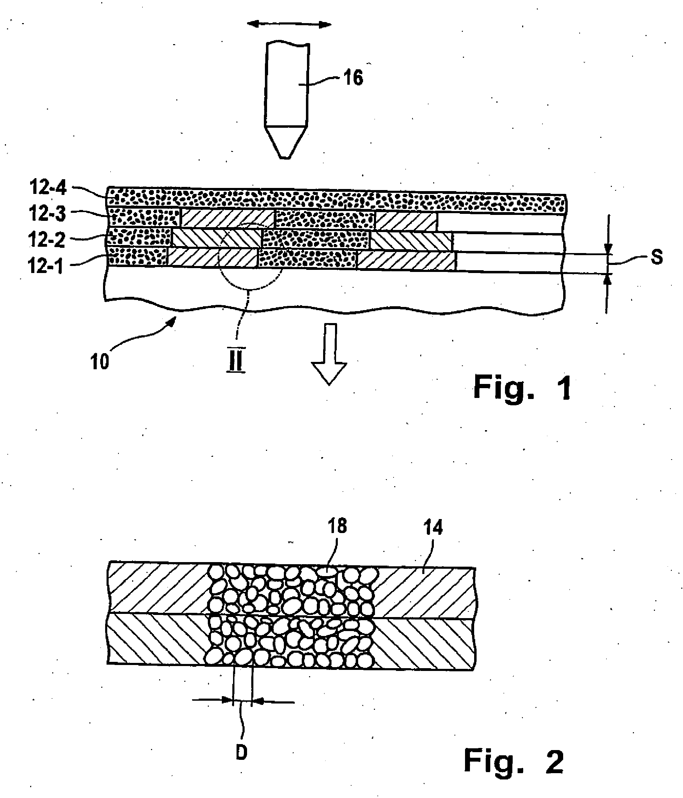

In Figur 1 ist schematisch dargestellt, wie ein Bauteil mittels schichtaufbauender Verfahren hergestellt wird. Man erkennt, dass auf eine in einen Bauraum stufenweise absenkbare Plattform 10 sukzessive Pulverschichten 12-1, 12-2, ... 12-n der Dicke S aufgebracht werden. Nach dem Aufbringen einer Lage werden die Partikel 18 (siehe Figur 2) von einem Energiestrahl aus einer Energiequelle 16 an gezielten Bereichen selektiv auf- oder angeschmolzen, wodurch die in der Figur schraffiert angedeuteten Bereiche 14 entstehen, welche hierdurch Bestandteil des herzustellenden Bauteils werden. Die Plattform wird anschließend um die Schichtdicke S abgesenkt, woraufhin eine neue Pulverschicht der Schichtdicke S aufgebracht wird. Der Energiestrahl überstreicht erneut eine vorgegebene Fläche, wodurch die entsprechenden Bereiche aufgeschmolzen und mit den in der vorhergehenden Lage aufgeschmolzenen Bereichen verschmolzen bzw. verbunden werden. Auf diese Weise entsteht nach und nach ein vielschichtiger Pulverblock mit eingebettetem Formkörper komplexer Struktur. Der Formkörper wird aus dem Pulverblock entfernt und in der Regel manuell von anhaftendem oder angesintertem Restpulver gereinigt.

Die Schichtdicke wird - je nach Anwendungsgebiet zwischen 20 und 300 µm gewählt, wobei - wie aus Figur 2 ersichtlich - die Mehrzahl der Pulverteilchen 18 einen Korndurchmesser D von etwa 1/3 der Schickstärke S haben.

Herkömmlich ist das Pulver von einem Thermoplasten, beispielsweise PA 11 oder PA 12 gebildet, wodurch die mechanische Festigkeit der Formkörper begrenzt bleibt, was durch den kleinen E-Modul im Bereich von 1,4 GPa und die geringe Zugfestigkeit im Bereich von 40 bis 50 MPa bedingt ist.

Zur Herstellung von Formkörpern mit wesentlich verbesserten mechanischen Eigenschaften gibt die Erfindung verschiedene Ansätze, die im Folgenden näher beschrieben werden:

### Ausführungsform 1:

Das Pulver hat einen ersten in Form von im Wesentlichen sphärischen Pulverteichen (18) vorliegenden Matrix-Anteil, der von einem aromatischen Polyetherketon, insbesondere einem Polyaryletherketon (PEEK)-Kunststoff mit der Repetiereinheit Oxy-1,4-Phenylen-Oxy-1,4-Phenylen-Carbonyl-1,4-Phenylen der allgemeinen Formel 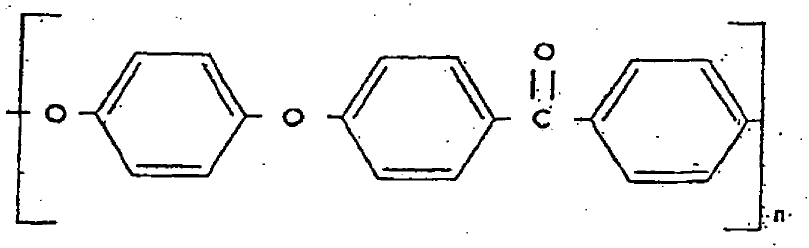 gebildet ist.

Ein solcher Werkstoff ist beispielsweise unter dem Handelsnamen "PEEK" von der Firma Victrex Plc. zu beziehen. Die Werkstoffeigenschaften liegen bei einer Zugfestigkeit von über 90 MPa und einem E-Modul im Bereich von über 3,5 GPa (gemäß ISO 527). Außerdem zeichnet sich dieser Werkstoff durch eine extrem gute Temperaturstabilität aus, so dass die aus ihm gebauten Formteile auch in thermisch äußerst anspruchsvollen Bereichen eingesetzt werden können.

Die Herstellung von Pulverteilchen aus diesem Material erfolgt vorzugsweise nach einem der folgenden Verfahren:
1. Sprühtrocknen
2. Aufmahlen; und
3. Schmelzsprühen oder Prillen

### Sprühtrocknen

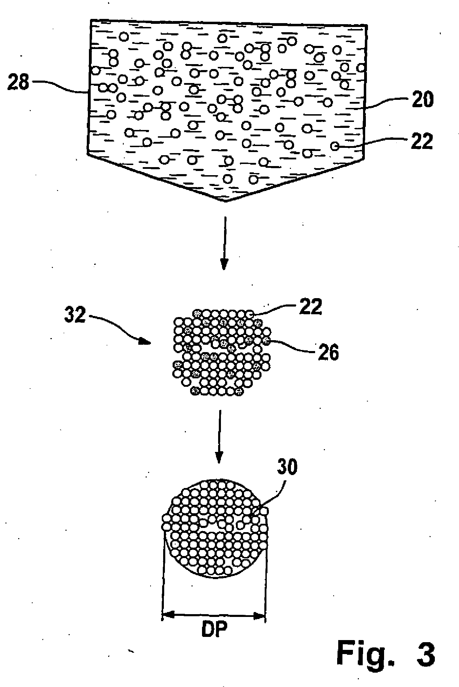

Hierzu wird - wie aus Figur 3 ersichtlich - zunächst eine Suspension mit in eine flüssige Phase, wie z.B. in ein Ethanol- oder ein Ethanol/Wasser-Gemisch 20 eingerührtem Matrix-Mikropulver 22 erstellt. Die Teilchen des Matrix-Mikropulvers 22 haben Abmessungen, die wesentlich unter der Teilchengröße DP des herzustellenden Pulverteilchens 30 liegen. Dabei ist im Behältnis auf eine gleichmäßige Durchmischung der Phasen zu achten.

Die Suspension wird durch eine nicht näher dargestellte Düse versprüht, wodurch sich Matrix-Mikropulver enthaltende Tröpfchen 32 bilden. Die flüssige Phase 26, im Einzelnen die Oberflächenspannung dieser Phase garantiert eine im Wesentlichen sphärische Gestalt der Tröpfchen.

Anschließend wird - beispielsweise in einer nachgeschalteten Heizstrecke - der flüchtige Anteil 26 der Tröpfchen 32 verdampft und/oder verdunstet, wodurch im Wesentlichen sphärische Agglomerate 30 zurück bleiben. Diese.Agglomerate 30 bilden die im späteren schichtaufbauenden Verfahren zu verwendenden Pulverpartikel. Dementsprechend werden die Prozessparameter des Verfahrens so gewählt, dass die Partikel in der gewünschten Korngrößenverteilung erzeugt werden.

### Aufmahlen:

Ein alternatives Verfahren besteht darin, dass der Werkstoff, der beispielsweise als grobes Granulat von etwa 3 mm Korngröße bezogen werden kann, zu einem geeigneten Feinpulver aufgemahlen wird.

Dabei wird zunächst das grobe Granulat auf eine Temperatur gekühlt, die unter der Temperatur liegt, bei der eine Versprödung des Materials eintritt. Die Kühlung erfolgt beispielsweise durch flüssigen Stickstoff. In diesem Zustand kann das grobe Granulat beispielsweise in einer Stift- oder Kaskadenmühle aüfgemahlen werden. Das gemahlene Pulver wird schließlich - vorzugsweise in einem Windsichter - entsprechend einem zu erreichenden vorbestimmten Fraktionsspektrum gesichtet.

Der Verfahrensschritt des Aufmahlens kann dabei bei weiterer Kühlung erfolgen.

Damit das aufgemahlene Pulver eine ausreichend glatte und vorzugsweise sphärische Oberfläche erhält, ist es von Vorteil, das aufgemahlene Gut einer Glättbehandlung, beispielsweise durch Einbettung oder Anlagerung von Mikro- bzw. Nanopartikeln, wie z.B. Aerosil, zu unterziehen.

### Schmelzsprühen bzw. Prillen:

Eine dritte Verfahrensvariante der Herstellung von Feinpulver aus aromatischem Polyetherketon, insbesondere einem Polyaryletherketon, besteht darin, dass einSchmelzsprühverfahren angewendet wird.

Dabei wird das Material in einem Tiegel aufgeschmolzen, der einen Anschluss zu einer Sprühdüse hat, mit der das Material zerstäubt wird.

Dabei verlassen kleine Tröpfchen die Düse. Aufgrund der Oberflächenspannung des Werkstoffs nehmen diese Tröpfchen im Wesentlichen sphärische Form an. Wenn die Tröpfchen anschließend durch eine Kühlstrecke bewegt werden, erstarren sie in dieser sphärischen Form, so dass Pulver in der für das schichtaufbauende Verfahren erwünschten Qualität vorliegt.

Vorzugsweise verwendet man zum Zerstäuben Heissgas. Mittels eines sogenannten Pebble-Heaters wird das Heißgas erzeugt, das zum Versprühen, das heißt zum Zerstäuben des aufgeschmolzenen Materials herangezogen wird

In der Regel wird dem Versprüh-Verfahrensschritt ein Sichtvorgang nachgeschaltet, um Pulverteilchen entsprechend einem vorbestimmten Fraktionsspektrum zu erhalten.

Alternativ zum Schmelzsprühen kann - soweit es der Matrix-Werkstoff zulässt - auch das Prillen Anwendung finden, bei dem anstatt einer Schmelze eine flüssige Phase des Matrix-Pulvers verwendet wird. Die Flüssige Phase kann beispielsweise durch verflüssigen des Matrix-Werkstoffs mittels eines Lösungsmittels gewonnen werden.

Die übrigen Verfahrensschritte sind analog zum Schmelzsprühen bzw. Sprühtrocknen ausgestattet, wobei die Tröpfchen beim Durchlaufen bzw. Durchfliegen einer Verfestigungsstrecke eine dauerhafte sphärische Form annehmen. Die Verfestigung der Tröpfchen kann beispielsweise dadurch vorgenommen werden, dass das Lösungsmittel in den gasförmigen Aggregatzustand überführt wird. Dies kann beispielsweise durch Verdampfen oder Verdunsten geschehen. Die Verdunstungswärme des Lösungsmittels kann in diesem Verfahrensschritt zur Aufheizung und damit zur Beschleunigung des Verfestigungsprozesses genutzt werden.

### Ausführungsform 2:

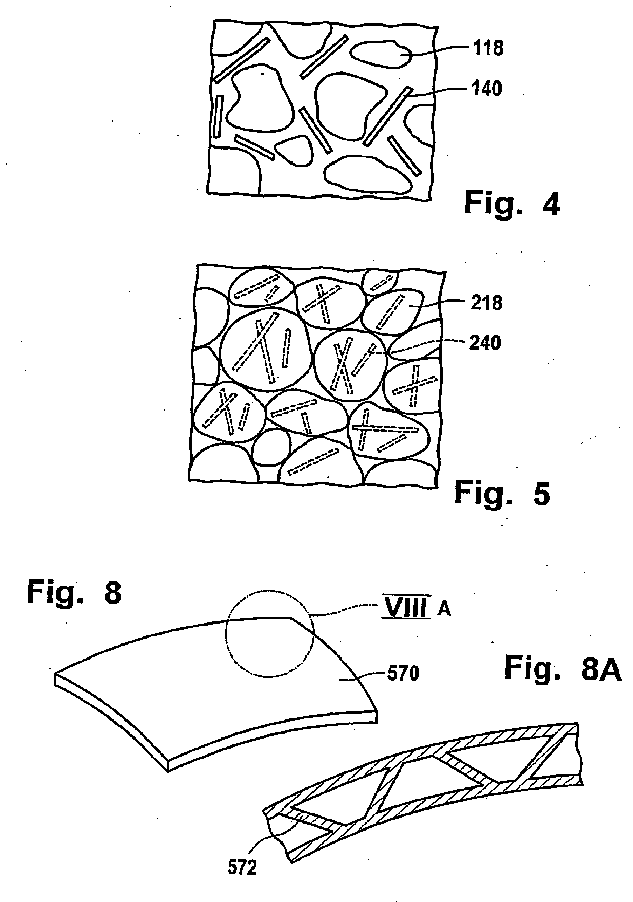

Es wurde - wie schematisch in Figur 4 gezeigt - Pulver mit einem ersten in Form von im Wesentlichen sphärischen Pulverteichen 118 vorliegenden Anteil, der von einem Matrix-Werkstoff gebildet ist, und zumindest einem weiteren Anteil in Form von versteifenden und/oder verstärkenden Fasern 140 verwendet. Der Matrix-Anteil kann von einem Metall oder einem thermoplastischen Kunststoff gebildet sein.

Es wurde folgendes Versuchsbeispiel durchgeführt:

PA12-Pulver mit einer Korngrößenverteilung mit d50 von etwa 50 µm wurde mit 10 Vol% Carbonfasern zweier unterschiedlicher Typen mit einer mittleren Faserlänge L50 von etwa 70 µm und einer Faserdicke von 7µm vermischt. Das so gewonnene Pulver konnte auf handelsüblichen rapid prototyping Maschinen zu fehlerlosen Formkörpern verarbeitet werden.

Die mechanischen Eigenschaften des auf der Basis dieses Pulver/Fasergemischs nach dem schichtaufbauenden Verfahren hergestellten Probekörpers konnten gegenüber einem keine Fasern enthaltenden Bauteil erheblich verbessert werden. Im Einzelnen konnte der E-Modul auf über 3,8 GPa und die Zugfestigkeit auf etwa 70 MPa gesteigert werden.

Diese Versuchsergebnisse wurden Ergebnissen mit Bauteilen gegenübergestellt, die durch Spritzgießen von mit Fasern vermischtem PA12 erhalten wurden, wobei die der Spritzgießmasse beigegebenen Fasern in gleicher Volumenkonzentration und gleicher Größenverteilung vorlagen. Die Meßergebnisse zeigten, dass die mechanischen Eigenschaften der nach dem schichtaufbauenden Verfahren gewonnenen Bauteile denjenigen der spritzgegossenen Bauteile in keiner Weise nachstehen. Der E-Modul konnte sogar beim gesinterten Körper noch gesteigert werden.

Wenngleich der Anteil an Fasern im Feinpulver - abhängig von der mittleren Korngöße und deren Verteilung variiert werden kann, kann er in der Regel nicht ohne Probleme über 25% angehoben werden. Um dennoch weiter verbesserte Materialeigenschaften realisieren zu können, bietet sich die dritte Ausführungsform der Erfindung an.

### Ausführungsform 3:

Gemäß der dritten Ausführungsform, die schematisch in Figur 3 verdeutlicht ist, wird ein Pulver geschaffen, das wesentlich höhere Faseranteile, nämlich von über 30 Vol % enthält und das dennoch so beschaffen ist, dass es aufgrund seiner guten Fließfähigkeit in einem schichtaufbauenden Verfahren verwendet werden kann.

Die Besonderheit besteht darin, dass die Fasern 240 in im Wesentlichen sphärische Pulver-Formkörper 218, die den Matrix-Werkstoff des herzustellenden Bauteils bilden, eingebettet sind, vorzugsweise derart, dass sie im Wesentlichen vollständig vom Matrix-Werkstoff umschlossen sind, wie das in Figur 5 angedeutet ist.

Für die Herstellung eines solchen Pulvers kommen die vorstehend beschriebenen Verfahren, d.h. das Sprühtrocknen, das Aufmahlen, das Prillen und das Schmelzsprühen mit geringfügiger Modifikation in Betracht:

### Sprühtrocknen

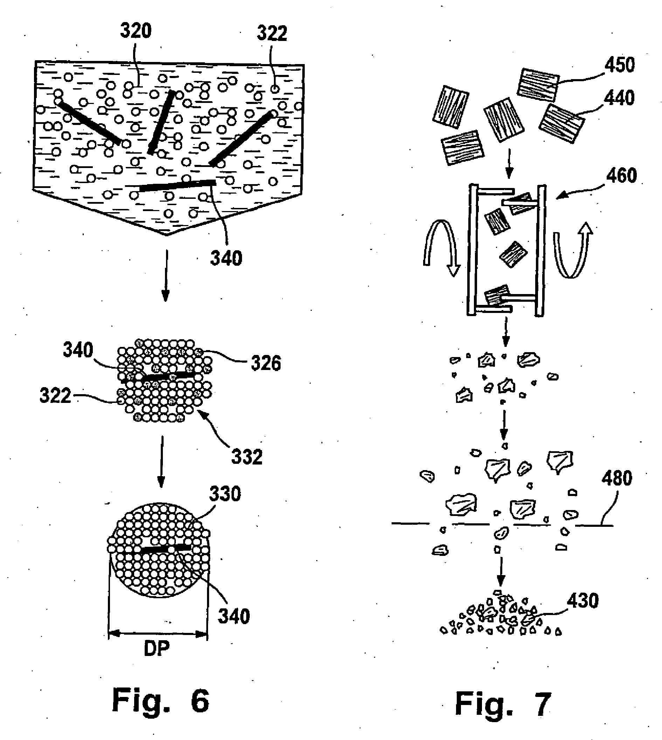

Dieses Verfahren ist in Figur 6 schematisch dargestellt. Es unterscheidet sich von dem vorstehend anhand Figur 3 beschriebenen Verfahren nur dadurch, dass in die flüssige Phase, wie z.B. in ein Ethanol- oder ein Ethanol/WasserGemisch 320 neben Matrix-Mikropulver 322 versteifende oder verstärkende Fasern 340 eingerührt werden. Die Teilchen des Matrix-Mikropulvers 322 haben Abmessungen, die wesentlich unter der Teilchengröße DP des herzustellenden Pulverteilchens 330 liegen. Die Faserlängen sind ebenfalls so gewählt, dass ihre mittlere Länge nicht über der mittleren zu erzielenden Korngröße der Pulverteilchen liegt. Dabei ist im Behältnis erneut auf eine gleichmäßige Durchmischung der Phasen zu achten.

Beim Versprühen der Suspension durch eine nicht näher dargestellte Düse bilden sich Matrix-Mikropulver und Faser(n) enthaltende Tröpfchen 332 bilden. Die flüssige Phase 326, im Einzelnen die Oberflächenspannung dieser Phase garantiert eine im Wesentlichen sphärische Gestalt der Tröpfchen.

Wenn anschließend der flüchtige Anteil 326 der Tröpfchen 332 verdampft und/oder verdunstet, bleiben erneut im Wesentlichen sphärische Agglomerate 330 zurück. Diese Agglomerate 330 bilden die im späteren schichtaufbauenden Verfahren zu verwendenden Pulverpartikel. Dementsprechend werden die Prozessparameter des Verfahrens so gewählt, dass die Partikel in der gewünschten Korngrößenverteilung erzeugt werden.

Gute Ergebnisse mit dem Sprühtrocknen lassen sich dann erzielen, wenn Mikropulver mit einer mittleren Korngröße d50 zwischen 3 und 10µm, vorzugsweise 5µm verwendet werden.

Wenn Fasern eingerührt sind, sollen diese - wenn der Matrix-Werkstoff Kunststoff ist - vorzugsweise mit einer mittleren Länge L50 von 20 bis 150 µm, vorzugsweise von 40 bis 70 µm verwendet werden.

Bei metallischem Matrix-Werkstoff sind die Längen der Fasern in der Regel kürzer zu wählen. Ein vorteilhafter Bereich für die mittleren Faserlänge L50 liegt zwischen 10 bis 100 µm, vorzugsweise zwischen 10 bis 80 µm.

Vorteilhafter Weise werden die Prozessparameterso eingestellt, dass im Wesentlichen sphärische Mikrotröpfchen mit einem mittleren Durchmesser D50 von 10 bis 70 µm entstehen.

Der Verdampfungs- bzw. Verdunstungsschritt wird vorteilhafter Weise durchgeführt wird, während die Tröpfchen durch eine Heizstrecke bewegt werden.

### Aufmahlen:

Ein alternatives Verfahren - welches schematisch in Figur 7 dargestellt ist-besteht darin, dass ein Fasern, beispielsweise Carbonfasern 440 enthaltender Werkstoff, der beispielsweise als grobes Granulat 450 von etwa 3 mm Korngröße oder Kantenlänge vorliegt, zu einem geeigneten Feinpulver aufgemahlen wird.

Dabei wird zunächst erneut das grobe Granulat 450 auf eine Temperatur gekühlt, die unter der Temperatur liegt, bei der eine Versprödung des Materials eintritt. Die Kühlung erfolgt beispielsweise durch flüssigen Stickstoff. In diesem Zustand kann das grobe Granulat beispielsweise in einer Stiftmühle - durch 460 angedeutet - aufgemahlen werden. Das gemahlene Pulver wird schließlich in einem Sichter 480 - vorzugsweise in einem Windsichter - entsprechend einem zu erreichenden vorbestimmten Fraktionsspektrum gesichtet. Die zu verwendenden Pulverteilchen sind mit 430 bezeichnet.

Der Verfahrensschritt des Aufmahlens kann dabei erneut bei weiterer Kühlung erfolgen. Auch ein optionaler Glättprozess durch Einbettung oder Anlagerung von Mikro- bzw. Nanopartikeln, wie z.B. Aerosil, kann nachgeschaltet werden.

### Schmelzsprühen bzw. Prillen:

Auch die vorstehend beschriebene weitere Verfahrensvariante, nämlich das sogenannte Schmelzsprühen kann zur Herstellung von Pulver nach Figur 5 angewendet wird.

Im Unterschied zum vorstehend beschriebenenen Verfahren wird in die aufgeschmolzene Schmelze aus Matrix-Material der Faseranteil eingerührt.

Alternativ zum Schmelzsprühen kann - soweit es der Matrix-Werkstoff zuässt - wiederum das Prillen Anwendung finden, bei dem statt einer Schmelze eine flüssige Phase des Matrix-Pulvers verwendet wird. Die Flüssige Phase kann beispielsweise durch verflüssigen des Matrix-Werkstoffs mittels eines Lösungsmittels gewonnen werden.

Die übrigen Verfahrensschritte sind analog zum Schmelzsprühen bzw. Sprühtrocknen ausgestattet, wobei die die versteifenden Fasern umgebenden Tröpfchen beim Durchlaufen bzw. Durchfliegen einer Verfestigungsstrecke eine dauerhafte sphärische Form annehmen. Die Verfestigung der Tröpfchen kann beispielsweise dadurch vorgenommen werden, dass das Lösungsmittel in den gasförmigen Aggregatzustand überführt wird. Dies kann beispielsweise durch Verdampfen oder Verdunsten geschehen. Die Verdunstungswärme des Lösungsmittels kann in diesem Verfahrensschritt zur Aufheizung und damit zur Beschleunigung des Verfestigungsprozesses genutzt werden.

Die vorstehend beschriebenen Ausführungsformen erlauben die Verarbeitung sowohl von thermoplastischen Kunststoff-Materialien als auch von metallischen Materialien.

Es können auch unterschiedliche Materialien gemischt werden.

Wenn der Matrix-Werkstoff von einem thermoplastischen Kunststoffmaterial gebildet, werden die Fasern aus der Gruppe der Carbon- und/oder Glasfasern ausgewählt.

Die mittlere Korngröße der sphärischen Pulverteilchen soll grundsätzlich nicht beschränkt sein. Gute Ergebnisse mit handelsüblichen Maschinen lasen sich jedenfalls dann erzielen, wenn die mittlere Korngröße d50 der sphärischen Pulverteilchen im Bereich von 20 bis 150, vorzugsweise von 40 bis 70 µm liegt. Die Fließfähigkeit eines solchen Pulvers lässt sich durch Homogenisierung der Größenverteilung noch steigern.

Wenn der Matrix-Werkstoff von einem metallischen Werkstoff gebildet ist, werden die Fasern vorzugsweise aus der Gruppe der Keramik- und der Borfasern ausgewählt. Bei einem solchen Pulver liegt die mittlere Korngröße d50 der sphärischen Pulverteilchen in der Regel auf einem niedrigeren Wert, beispielsweise im Bereich von 10 bis 100, vorzugsweise von 10 bis 80 µm.

Aus der Beschreibung wird klar, dass sich mit dem erfindungsgemäßen Pulver zur Verwendung bei schichtaufbauenden Verfahren (pulverbasiertes generative rapid prototyping Verfahren), wie z.B. nach der Technologie des selektiven Laser-Sintern oder nach der Laser-Schmelz-Technologie, räumlichen Strukturen bzw. Formkörper herstellen lassen, deren mechanische und/oder thermische Eigenschaften bislang undenkbar waren.

So lässt sich der E-Modul von PEEK, wenn es mit 10, 20 bzw. 30 Vol% Carbonfasern verstärkt ist, die nach einem der beschriebenen Verfahren in die Pulverteilchen eingebracht oder mit diesen vermischt sind, auf 7, 13,5 bzw. 22,2 GPa steigern, während die Zugfestigkeit auf 136, 177 bzw. 226 MPa angehoben werden kann.

Wenn als Matrix-Werkstoff PA12 verwendet wird, ergibt sich mit einem Faseranteil von 10, 20 bzw. 30 Vol % eine Verbesserung der mechanischen Eigenschaften wie folgt: E-Modul von 3,4 bzw. 6,6 bzw. 13,9 GPa; Zugfestigkeit von 66 bzw. 105 bzw. 128 Mpa.

Damit gelingt es erstmalig, - wie schematisch in den Figuren 8, 8A angedeutet, das schichtaufbauende Verfahren sinnvoll zur Herstellung von hohlen, komplex geformten, beispielsweise mehrfach gekrümmten Formkörpern 570 mit innenliegenden, vorzugsweise dreidimensionalen fachwerkartigen Verstrebungen 572 heran zu ziehen, wodurch nicht nur extrem leichte, sondern auch thermisch und mechanisch höchst belastbare Bauteile gefertigt werden können.

Selbstverständlich sind Abweichungen von den vorstehend beschriebenen Ausführungsformen möglich, ohne den Grundgedanken der Erfindung zu verlassen. So können Nachbehandlungsschritte der einzelnen Pulver-Herstellungsverfahren auch für andere Verfahren angewandt werden. Der mittels Mikrokörper durchzuführende Glättvorgang kann selbstverständlich auch bei den beiden alternativ beschriebenen Verfahren angewandt werden.

Die Erfindung schafft somit neue Pulver für die Verwendung bei der Herstellung von räumlichen Strukturen bzw. Formkörpern mittels schichtaufbauender Verfahren, sowie Verfahren zu deren wirtschaftlicher Herstellung. Die Pulver haben die Besonderheit, dass sie einerseits über ein gutes Fließverhalten verfügen, und gleichzeitig so beschaffen sind, dass der mit dem Pulver im rapid prototyping hergestellte Formkörper erheblich verbesserte mechanische und/oder thermische Eigenschaften hat. Gemäß einer besonders vorteilhaften Ausgestaltung hat das Pulver einen ersten in Form von im Wesentlichen sphärischen Pulverteichen vorliegenden Anteil, der von einem Matrix-Werkstoff gebildet ist, und zumindest einen weiteren Anteil in Form von versteifenden und/oder verstärkenden Fasern, die vorzugsweise in den Matrix-Werkstoff eingebettet sind.

## Patentansprüche

1. Pulver für die Verwendung bei der Herstellung von räumlichen Strukturen oder Formkörpern mittels schichtaufbauender Verfahren (pulverbasiertes generative rapid prototyping Verfahren), mit einem ersten in Form von im Wesentlichen sphärischen Pulverteichen (18; 118; 218; 330; 430) vorliegenden Anteil, der von einem Matrix-Werkstoff gebildet ist, und zumindest einem weiteren Anteil in Form von versteifenden und/oder verstärkenden Fasern (140; 240; 340; 440), **dadurch gekennzeichnet, dass** die mittlere Länge L50 der Fasern (140; 240) maximal dem Wert der mittleren Korngröße d50 der sphärischen Pulverteilchen (118; 218; 330; 430) entspricht.

2. Pulver nach Anspruch 1, wobei die mittlere Korngröße d50 der sphärischen Pulverteilchen im Bereich von 20 bis 150 µm liegt.

3. Pulver nach einem der Ansprüche 1 bis 2, wobei die mittlere Korngröße d50 der sphärischen Pulverteilchen im Bereich von 40 bis 70 µm liegt.

4. Pulver nach einem der Ansprüche 1 bis 3, wobei der Volumenanteil der Fasern (140) bis zu 25% beträgt.

5. Pulver nach einem der Ansprüche 1 bis 4, wobei der Volumenanteil der Fasern (140) bis zu 15% beträgt.

6. Pulver nach einem der Ansprüche 1 bis 5, wobei der Volumenanteil der Fasern (140) bis zu 10% beträgt.

7. Pulver nach einem der Ansprüche 1 bis 3, bei dem die Fasern (240; 340; 440) in den Matrix-Werkstoff (118; 330) eingebettet sind.

8. Pulver nach Anspruch 7; bei dem die Fasern (240; 340; 440) im Wesentlichen vollständig vom Matrix-Werkstoff umschlossen sind.

9. Pulver nach Anspruch 7, **dadurch gekennzeichnet, dass** der Volumenanteil der Fasern (240; 340; 440) größer als 15% ist.

10. Pulver nach Anspruch 7, wobei der Volumenanteil der Fasern (240; 340; 440) größer als 25% ist.

11. Pulver für die Verwendung bei der Herstellung von räumlichen Strukturen oder Formkörpern mittels schichtaufbauender Verfahren (pulverbasiertes generative rapid prototyping Verfahren), mit einem ersten in Form von im Wesentlichen sphärischen Pulverteichen (18; 118; 218; 330; 430) vorliegenden Anteil, der von einem Matrix-Werkstoff gebildet ist, und zumindest einem weiteren Anteil in Form von versteifenden und/oder verstärkenden Fasern (140; 240; 340; 440), **dadurch gekennzeichnet, dass** die Fasern (240; 340; 440) in den Matrix-Werkstoff (118; 330) eingebettet sind, und wobei die Fasern im Wesentlichen vollständig vom Matrix-Werkstoff umschlossen sind.

12. Pulver nach Anspruch 11, **dadurch gekennzeichnet, dass** der Volumenanteil der Fasern (240; 340; 440) größer als 15% ist.

13. Pulver nachAnspruch 11 oder 12, wobei der Volumenanteil der Fasern (240; 340; 440) größer als 25% ist.

14. Pulver nach einem der Ansprüche 1 bis 13, **dadurch gekennzeichnet, dass** der Matrix-Werkstoff von einem thermoplastischen Kunststoff gebildet ist.

15. Pulver nach Anspruch 13 oder 14, **dadurch gekennzeichnet, dass** die Fasern von Carbon- und/oder Glasfasern gebildet sind.

16. Pulver nach einem der Ansprüche 1 bis 13, **dadurch gekennzeichnet, dass** der Matrix-Anteil von einem aromatischen Polyetherketon gebildet ist.

17. Pulver nach einem der Ansprüche 1 bis 13, **dadurch gekennzeichnet, dass** der Matrix-Anteil von einem Polyaryletherketon (PEEK)-Kunststoff mit der Repetiereinheit Oxy-1,4-Phenylen-Oxy-1,4-Phenylen-Carbonyl-1,4-phenylen 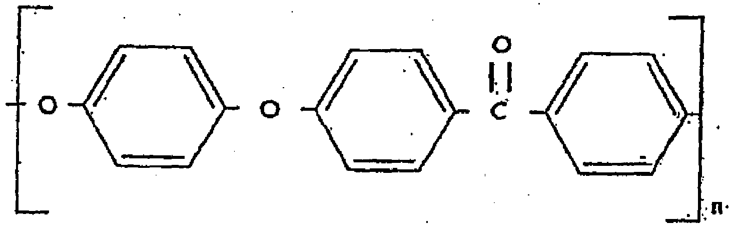 gebildet ist.

18. Pulver nach einem der Ansprüche 1 bis 13, **dadurch gekennzeichnet, dass** der Matrix-Werkstoff von einem metallischen Werkstoff gebildet ist.

19. Pulver nach Anspruch 18, **dadurch gekennzeichnet, dass** die Fasern aus der Gruppe der Keramik-und der Borfasern gewählt sind.

20. Pulver nach Anspruch 18 oder 19, wobei die mittlere Korngröße d50 der sphärischen Pulverteilchen im Bereich von 10 bis 100, vorzugsweise von 10 bis 80 µm liegt.

21. Pulver nach einem der Ansprüche 18 bis 20, wobei die mittlere Korngröße d50 der sphärischen Pulverteilchen im Bereich von 10 bis 80 µm liegt.

22. Verfahren zur Herstellung eines Pulvers nach einem der Ansprüche 1 bis 17, mit im Wesentlichen sphärischen, aus einem thermoplastischen Matrix-Werkstoff bestehenden Pulverteilchen, in die optional versteifende und/oder verstärkende Fasern eingebettet sind, mit folgenden Verfahrensschritten:
a) Erstellen einer Suspension mit in eine flüssige Phase (20; 320) eingerührtem Matrix-Mikropulver (22; 322) mit einer wesentlich unter der Abmessung des herzustellenden Pulverteilchens liegenden Teilchengröße und optional mit verstärkenden und/oder versteifenden Fasern (340) mit einer Länge, die unter der Abmessung der herzustellenden Pulverteilchen liegt;
b) Versprühen der Suspension durch eine Düse zur Ausbildung von Matrix-Mikropulver und optional Fasern enthaltenden Tröpfchen (32; 332); und
c) Verdampfen und/oder Verdunsten des flüchtigen Anteils (26; 326) der Tröpfchen, wodurch im Wesentlichen sphärische Agglomerate (30; 330) zurück bleiben.

23. Verfahren zur Herstellung eines Pulvers nach einem der Ansprüche 18 bis 21, mit im Wesentlichen sphärischen, aus einem metallischen Matrix-Werkstoff bestehenden Pulverteilchen (330), in die versteifende und/oder verstärkende Fasern (340) eingebettet sind, mit folgenden Verfahrensschritten:
a) Erstellen einer Suspension mit in eine flüssige Phase (320) eingerührtem Matrix-Mikropulver (322) mit einer wesentlich unter der Abmessung des herzustellenden Pulverteilchens liegenden Teilchengröße und mit verstärkenden und/oder versteifenden Fasern (340) mit einer Länge, die unter der Abmessung (DP) der herzustellenden Pulverteilchen liegt;
b) Versprühen der Suspension durch eine Düse zur Ausbildung von Matrix-Mikropulver und Fasern enthaltenden Tröpfchen (332); und
c) Verdampfen und/oder Verdunsten des flüchtigen Anteils (326) der Tröpfchen, wodurch im Wesentlichen sphärische Agglomerate (330) zurück bleiben.

24. Verfahren nach Anspruch 22, bei dem Mikropulver (22; 322) mit einer mittleren Korngröße d50 zwischen 3 und 10 µm verwendet werden.

25. Verfahren nach Anspruch 24, wobei Fasern (340) mit einer mittleren Länge L50 von 20 bis 150 µm verwendet werden.

26. Verfahren nach Anspruch 24, wobei Fasern (340) mit einer mittleren Länge L50 von 40 bis 70 µm verwendet werden.

27. Verfahren nach Anspruch 23; bei dem Mikropulver (322) mit einer mittleren Korngröße d50 zwischen 3 und 10 µm und Fasern (340) mit einer mittleren Länge L50 von 10 bis 100 µm verwendet werden.

28. Verfahren nach Anspruch 27, wobei die mittlere Länge L50 der Fasern (340) im Bereich von 10 bis 80 µm liegt.

29. Verfahren nach Anspruch 27 oder 28, wobei die mittlere Korngröße d50 5 µm beträgt.

30. Verfahren nach einem der Ansprüche 22 bis 29, **dadurch gekennzeichnet, dass** die flüssige Phase ein Ethanol-oder ein Ethanol/Wasser-Gemisch ist.

31. Verfahren nach einem der Ansprüche 22 bis30, **dadurch gekennzeichnet, dass** das Versprühen der Suspension derart erfolgt, dass im Wesentlichen sphärische Mikrotröpfchen (32; 332) mit einem mittleren Durchmesser d50 von 10 bis 70 µm entstehen.

32. Verfahren nach Anspruch 22 oder 23, **dadurch gekennzeichnet, dass** der Verdampfungs-oder Verdunstungsschritt durchgeführt wird, während die Tröpfchen (32; 332) durch eine Heizstrecke bewegt werden.

33. Verfahren zur Herstellung eines Pulvers nach einem der Ansprüche 1 bis 17, mit im Wesentlichen sphärischen, aus einem thermoplastischen Matrix-Werkstoff bestehenden Pulverteilchen (430), in die optional versteifende und/oder verstärkende Fasern (440) eingebettet sind, mit folgenden Verfahrensschritten:
a) Kühlen von grobem Granulat (450) aus optional faserverstärktem Kunststoff unter eine Temperatur, bei der eine Versprödung des Matrix-Werkstoffs eintritt;
b) Aufmahlen des gekühlten Granulats; und
c) Sichten des aufgemahlenen Gutes entsprechend einem vorbestimmten Fraktionsspektrum.

34. Verfahren nach Anspruch 33, **dadurch gekennzeichnet, dass** der Schritt des Aufmahlens mittels einer Stiftmühle (460) erfolgt.

35. Verfahren nach Anspruch 33 oder 34, **dadurch gekennzeichnet, dass** der Schritt des Aufmahlens bei weiterer Kühlung erfolgt.

36. Verfahren nach einem der Ansprüche 33 bis 35, **dadurch gekennzeichnet, dass** der Verfahrensschritt des Sichtens mittels eines Windsichters (480) erfolgt.

37. Verfahren nach einem der Ansprüche 33 bis 36, **dadurch gekennzeichnet, dass** das aufgemahlene Gut einer Glättbehandlung unterzogen wird.

38. Verfahren nach Anspruch 37, **dadurch gekennzeichnet, dass** die Glättbehandlung durch Einbettung oder Anlagerung von Mikro- bzw. Nanopartikeln erfolgt.

39. Verfahren nach Anspruch 38, wobei die Glättbehandlung durch Einbettung oder Anlagerung von Aerosil erfolgt.

40. Verfahren zur Herstellung eines Pulvers nach einem der Ansprüche 1 bis 21, mit im Wesentlichen sphärischen, aus einem Matrix-Werkstoff bestehenden Pulverteilchen, in die optional versteifende und/oder verstärkende Fasern eingebettet sind, mit folgenden Verfahrensschritten:
a) Überführen des Matrix-Werkstoffs in eine flüssige Phase;
b) optional Einrühren der Fasern in die flüssige Phase;
c) Verblasen der optional die Fasern enthaltenden flüssigen Phase durch eine Düse zur Ausbildung von optional Fasern enthaltenden Tröpfchen; und
d) Leiten der Tröpfchen durch eine Verfestigungsstrecke.

41. Verfahren nach Anspruch 40, **dadurch gekennzeichnet, dass** die flüssige Phase durch Aufschmelzen des Matrix-Werkstoffs gewonnen wird, und dass die optional die Fasern enthaltende Schmelze verblasen und anschließend durch eine Kühlstrecke geleitet wird.

42. Verfahren nach Anspruch 41, **dadurch gekennzeichnet, dass** die Zerstäubung der Schmelze in einem Heißgasstrahl erfolgt.

43. Verfahren nach einem der Ansprüche 40 bis 42, **gekennzeichnet durch** den weiteren Verfahrensschritt des Sichtens der Pulverteilchen entsprechend einem vorbestimmten Fraktionsspektrum.

44. Verfahren zur Herstellung von räumlichen Strukturen bzw. Formkörpern mittels schichtaufbauender Verfahren (pulverbasiertes generative rapid prototyping Verfahren) unter Verwendung eines Pulvers nach einem der Ansprüche 1 bis 21.

45. Verfahren nach Anspruch 44, wobei als schichtaufbauendes Verfahren die selektive Laser-Sinter- oder die Laser-Schmelz-Technologie Anwendung findet.

46. Verwendung des Pulvers nach einem der Ansprüche 1 bis 21 zum selektiven Laser Sintern oder zur Laser-Schmelz-Technologie.

## Claims

1. A powder for use in the production of three-dimensional structures or molded bodies by means of layered manufacturing methods (powder-based generative rapid prototyping method), comprising a first fraction that is present in the form of substantially spherical powder particles (18; 118; 218; 330; 430) and that is formed by a matrix material, and at least one further fraction in the form of strengthening and/or reinforcing fibers (140; 240; 340; 440), **characterized in that** the medium length L50 of the fibers (140; 240) maximally corresponds to the value of the medium grain size d50 of the spherical powder particles (118; 218; 339; 430).

2. The powder according to claim 1, wherein the medium grain size d50 of the spherical powder particle lies in the range from 20 to 150 µm.

3. The powder according to claim 1 or 2, wherein the medium grain size d50 of the spherical powder particles lies in the range from 40 to 70 µm.

4. The powder according to any of claims 1 to 3, wherein the volume fraction of the fibers (140) is up to 25%.

5. The powder according to any of claims 1 to 4, wherein the volume fraction of the fibers (140) is up to 15%.

6. The powder according to any of claims 1 to 5, wherein the volume fraction of the fibers (140) is up to 10%.

7. The powder according to any of claims 1 to 3, wherein the fibers (240; 340; 440) are embedded into the matrix material (118; 330).

8. The powder according to claim 7, wherein the fibers (240; 340; 440) are substantially fully enclosed by the matrix material.

9. The powder according to claim 7, **characterized in that** the volume fraction of the fibers (240; 340; 440) is greater than 15%.

10. The powder according to claim 7, wherein the volume fraction of the fibers (240; 340; 440) is greater than 25%.

11. A powder for use in the production of three-dimensional structures or molded bodies by means of layered manufacturing methods (powder-based generative rapid prototyping method), comprising a first fraction that is present in the form of substantially spherical powder particles (18; 118; 218; 330; 430) that is formed by a matrix material, and at least one further fraction in the form of strengthening and/or reinforcing fibers (140; 240; 340; 440), **characterized in that** the fibers (240; 340; 440) are embedded into the matrix-material (118; 330) and wherein the fibers are substantially fully enclosed by the matrix material.

12. The powder according to claim 11, **characterized in that** the volume fraction of the fibers (240; 340; 440) is greater than 15%.

13. The powder according to claim 11 or 12, wherein the volume fraction of the fibers (240; 340; 440) is greater than 25%.

14. The powder according to any of claims 1 to 13, **characterized in that** the matrix material is formed by a thermoplastic plastic material.

15. The powder according to claim 13 or 14, **characterized in that** the fibers are formed by carbon and/or glass fibers.

16. The powder according to any of claims 1 to 13, **characterized in that** the matrix fraction is formed by an aromatic polyetherketone.

17. The powder according to any of claims 1 to 13, **characterized in that** the matrix fraction is formed by a polyaryletherketone (PEEK) plastic with the repeating unit Oxy-1, 4-phenylene-oxy-1, 4-phenylene-carbonyl-1, 4-phenylen.

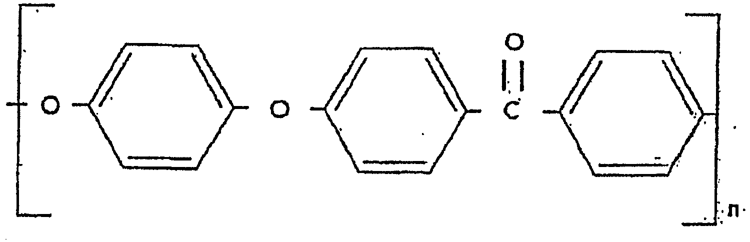

18. The powder according to any of claims 1 to 13, **characterized in that** the matrix-material is formed by a metallic material.

19. The powder according to claim 18, **characterized in that** the fibers are selected from the group of ceramic and of boron fibers.

20. The powder according to claim 18 or 19, wherein the medium grain size d50 of the spherical powder particles lies in the range from 10 to 100 µm, preferably in the range from 10 to 80 µm.

21. The powder according to any of claims 18 to 20, wherein the medium grain size d50 of the spherical powder particles lies in the range from 10 to 80 µm.

22. A method for the production of a powder according to any of claims 1 to 17, comprising substantially spherical powder particles consisting of a thermoplastic matrix material, into which strengthening and/or reinforcing fibers are optionally embedded, said method comprising the following method steps:
a) preparing a suspension with a matrix micro powder (22; 322) having a particle size that lies substantially below the size of the powder particle to be produced and optionally strengthening and/or reinforcing fibers (340) having a length below the size of the powder particles to be produced being stirred into a liquid phase (20; 320);
b) spraying the suspension through a nozzle for forming droplets (32, 332) comprising matrix micro powder and optionally fibers; and
c) evaporating and/or volatilizing the volatile fraction (26, 326) of the droplets, so that substantially spherical agglomerates (30, 330) are left.

23. A method for the production of a powder according to any of claims 18 to 21 comprising substantially spherical powder particles (330) consisting of a metallic matrix material, into which strengthening and/or reinforcing fibers (340) are embedded, said method comprising the following method steps:
a) preparing a suspension with a matrix micro powder (322) having a particle size that lies substantially below the size of the powder particle to be produced and with strengthening and/or reinforcing fibers (340) having a length below the size (DP) of the powder particles to be produced being stirred into a liquid phase (320);
b) spraying the suspension through a nozzle for producing droplets (332) comprising matrix micro powder and fibers; and
c) evaporating and/or volatilizing the volatile fraction (326) of the droplets, so that substantially spherical agglomerates (330) are left.

24. The method according to claim 22, wherein micro powders (22; 322) with a medium grain size d50 between 3 and 10 µm are used.

25. The method according to claim 24, wherein fibers (340) with a medium length L50 from 20 to 150 µm are used.

26. The method according to claim 24, wherein fibers (340) with a medium length L50 from 40 to 70 µm are used.

27. The method according to claim 23, wherein micro powders (322) with a medium grain size d50 between 3 and 10 µm and fibers (340) with a medium length L50 from 10 to 100 µm are used.

28. The method according to claim 27, wherein the medium length L50 of the fibers (340) lies in the range from 10 to 80 µm.

29. The method according to claim 27 or 28, wherein the medium grain size d50 is 5µm.

30. The method according to any of claims 22 to 29, **characterized in that** the liquid phase is an ethanol or an ethanol/water mixture.

31. The method according to any of claims 22 to 30, **characterized in that** the spraying of the suspension is performed such, that substantially spherical micro droplets (32; 332) with a medium diameter d50 from 10 to 70 µm are produced.

32. The method according to claim 22 or 23, **characterized in that** the evaporating or volatilizing step is performed, while the droplets (32; 332) are moved through a heating path.

33. A method for the production of a powder according to any of claims 1 to 17, comprising substantially spherical powder particles (430) consisting of a thermoplastic matrix material, into which strengthening and/or reinforcing fibers (440) are optionally embedded, said method comprising the following method steps:
a) cooling coarse granulate (450) of optionally fiberreinforced plastic material below a temperature, at which an embrittlement of the matrix material occurs;
b) grinding the cold granulate; and
c) separating the ground good in correspondence with a predetermined fraction or spectrum.

34. The method according to claim 33, **characterized in that** the step of grinding is performed by means of a peg mill (460).

35. The method according to claim 33 or 34, **characterized in that** the step of grinding is performed with further cooling.

36. The method according to any of claims 33 to 35, **characterized in that** the method step of separating is performed by means of an air separator (480).

37. The method according to any of claims 33 to 36, **characterized in that** the ground good is subject to a smoothing treatment.

38. The method according to claim 37, **characterized in that** the smoothing treatment is performed by the embedding or agglomerating of micro or nano particles, respectively.

39. The method according to claim 38, wherein the smoothing treatment is performed by embedding or agglomeration of Aerosil.

40. A method for the production of a powder according to any of claims 1 to 21 comprising substantially spherical powder particles consisting of a matrix material, into which strengthening and/or reinforcing fibers are optionally embedded, said method comprising the following method steps:
a) transferring the matrix material to a liquid phase;
b) optionally stirring the fibers into the liquid phase;
c) blowing the liquid phase that optionally comprises the fibers through a nozzle for producing droplets that optionally comprise fibers; and
d) guiding the droplets through a solidifying path.

41. The method according to claim 40, **characterized in that** the liquid phase is obtained by fusing of the matrix material, and **in that** the melt that optionally comprises the fibers, is blown and subsequently guided through a cooling path.

42. The method according to claim 41, **characterized in that** the atomization of the melt is performed in a hot gas jet.

43. The method according to any of claims 40 to 42, **characterized by** the further method step of separating the powder particles in correspondence with a predetermined fractional spectrum.

44. A method for the production of three-dimensional structures or molded bodies by means of layered manufacturing methods (powder-based generative rapid prototyping method), using a powder according to any of claims 1 to 21.

45. The method according to claim 44, wherein the selective laser sintering or laser melting technology are used as layered manufacturing method.

46. Use of the powder according to one of the claims 1 to 21 for selective laser sintering or for the laser melting technology.

## Revendications

1. Poudre pour utilisation lors de la fabrication de structures ou de corps de forme tridimensionnel(le)s, au moyen d'un procédé opérant une construction par couches (procédé appelé generative rapid prototyping à base de poudre), avec une première partie se présentant sous forme de particules de poudre (18 ; 118 ; 218 ; 330 ; 430) sensiblement sphériques, formée par un matériau de matrice, et au moins une autre partie ayant la forme de fibres de rigidification et/ou de renforcement (140 ; 240 ; 340 ; 440), **caractérisée en ce que** la longueur moyenne L50 des fibres (140 ; 240) correspond au maximum à la valeur de la taille de grain moyenne d50 des particules de poudre (118 ; 218 ; 330 ; 430) sphériques.

2. Poudre selon la revendication 1, dans laquelle la taille de grain moyenne d50 des particules de poudre sphériques est située dans la plage allant de 20 à 150 µm.

3. Poudre selon l'une des revendications 1 à 2, dans laquelle la taille de grain moyenne d50 des particules de poudre sphériques est située dans la plage allant de 40 à 70 µm.

4. Poudre selon l'une des revendications 1 à 3, dans laquelle la proportion volumique des fibres (140) va jusqu'à 25 %.

5. Poudre selon l'une des revendications 1 à 4, dans laquelle la proportion volumique des fibres (140) va jusqu'à 15 %.

6. Poudre selon l'une des revendications 1 à 5, dans laquelle la proportion volumique des fibres (140) va jusqu'à 10 %.

7. Poudre selon l'une des revendications 1 à 3, dans laquelle les fibres (240 ; 340 ; 440) sont incorporées dans le matériau de matrice (118 ; 330).

8. Poudre selon la revendication 7, dans laquelle les fibres (240 ; 340 ; 440) sont entourées sensiblement complètement par du matériau de matrice.

9. Poudre selon la revendication 7, **caractérisée en ce que** la proportion volumique des fibres (240 ; 340 ; 440) est supérieure à 15 %.

10. Poudre selon la revendication 7, dans laquelle la proportion volumique des fibres (240 ; 340 ; 440) est supérieure à 25 %.

11. Poudre pour l'utilisation lors de la fabrication de structures ou de corps de forme tridimensionnel(le)s, au moyen d'un procédé opérant une construction par couches (procédé appelé generative rapid prototyping à base de poudre), avec une première partie se présentant sous forme de particules de poudre (18 ; 118 ; 218 ; 330 ; 430) sensiblement sphériques, formées par un matériau de matrice, et au moins une autre partie ayant la forme de fibres de rigidification et/ou de renforcement (140 ; 240 ; 340 ; 440), **caractérisée en ce que** les fibres (240, 340, 440) sont incorporées dans le matériau de matrice (118 ; 330), et dans laquelle les fibres (240 ; 340 ; 440) sont entourées sensiblement complètement par du matériau de matrice.

12. Poudre selon la revendication 11, **caractérisée en ce que** la proportion volumique des fibres (240 ; 340 ; 440) est supérieure à 15 %.

13. Poudre selon la revendication 11 ou 12, dans laquelle la proportion volumique des fibres (240 ; 340 ; 440) est supérieure à 25 %.

14. Poudre selon l'une des revendications 1 à 13, **caractérisée en ce que** le matériau de matrice est formé par une matière synthétique thermoplastique.

15. Poudre selon la revendication 13 ou 14, **caractérisée en ce que** les fibres sont formées par des fibres de carbone et/ou de verre.

16. Poudre selon l'une des revendications 1 à 13, **caractérisée en ce que** la proportion de matrice est formée par une polyéthercétone aromatique.

17. Poudre selon l'une des revendications 1 à 13, **caractérisée en ce que** la proportion de matrice est formée par une matière synthétique de type polyaryléthercétone (PEEK), avec l'unité répétitive oxy-1,4-phénylène-oxy-1,4-phénylène-carbonyl-1,4-phénylène.

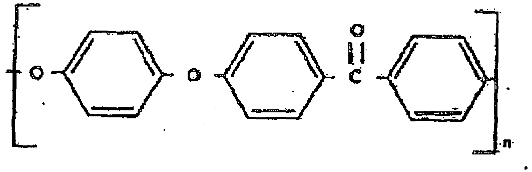

18. Poudre selon l'une des revendications 1 à 13, **caractérisée en ce que** le matériau de matrice est formé par un matériau métallique.

19. Poudre selon la revendication 18, **caractérisée en ce que** les fibres sont choisies dans le groupe des fibres de céramique et de bore.

20. Poudre selon la revendication 18 ou 19, dans laquelle la taille de grain moyenne d50 des particules de poudre sphériques est située dans la plage allant de 10 à 100, de préférence de 10 à 80 µm.

21. Poudre selon l'une des revendications 18 à 20, dans laquelle la taille de grain moyenne d50 des particules de poudre sphériques est située dans la plage de 10 à 80 µm.

22. Procédé de fabrication d'une poudre selon l'une des revendications 1 à 17, avec des particules de poudre sensiblement sphériques, composées d'un matériau de matrice thermoplastique, dans lesquelles sont éventuellement incorporées des fibres de rigidification et/ou de renforcement, présentant les étapes de procédé suivantes :
a) préparation d'une suspension avec une micro-poudre de matrice (22 ; 322) introduite avec agitation dans une phase liquide (20 ; 320), ayant une taille de particule sensiblement inférieure à la dimension de la particule de poudre à préparer et éventuellement avec des fibres de renforcement et/ou de rigidification (340) d'une longueur inférieure à la dimension des particules de poudre à préparer ;
b) pulvérisation de la suspension par une buse pour former des gouttelettes (32 ; 332) contenant une micro-poudre de matrice et éventuellement des fibres ; et
c) évaporation et/ou volatilisation de la partie liquide (26 ; 326) des gouttelettes, faisant que subsistent des agglomérats (30 ; 330) sensiblement sphériques.

23. Procédé de fabrication d'une poudre selon l'une des revendications 18 à 21, avec des particules de poudre (330) sensiblement sphériques, composées d'un matériau de matrice métallique, dans lesquelles sont incorporées les fibres de rigidification et/ou de renforcement (340), présentant les étapes de procédé suivantes :
a) préparation d'une suspension avec une micro-poudre de matrice (322) introduite avec agitation dans une phase liquide (320), ayant une taille de particule sensiblement inférieure à la dimension de la particule de poudre à préparer et avec des fibres de renforcement et/ou de rigidification (340) d'une longueur inférieure à la dimension (DP) des particules de poudre à préparer ;
b) pulvérisation de la suspension par une buse pour former des gouttelettes (332) contenant une micro-poudre de matrice et des fibres ; et
c) évaporation et/ou volatilisation de la partie liquide (326) des gouttelettes, faisant que subsistent des agglomérats (330) sensiblement sphériques.

24. Procédé selon la revendication 22, dans lequel de la micro-poudre (22 ; 322) d'une taille de grain moyenne d50 comprise entre 3 et 10 µm est utilisée.

25. Procédé selon la revendication 24, dans lequel des fibres (340) d'une longueur moyenne L50 de 20 à 150 µm sont utilisées.

26. Procédé selon la revendication 24, dans lequel des fibres (340) d'une longueur moyenne L50 de 40 à 70 µm sont utilisées.

27. Procédé selon la revendication 23, dans lequel une micro-poudre (322) d'une taille de grain moyenne d50 entre 3 et 10 µm et des fibres (340) d'une longueur moyenne L50 de 10 à 100 µm sont utilisées.

28. Procédé selon la revendication 27, dans lequel la longueur moyenne L50 des fibres (340) est dans la plage de 10 à 80 µm.

29. Procédé selon la revendication 27 ou 28, dans lequel la taille de grain moyenne d50 est de 5 µm.

30. Procédé selon l'une des revendications 22 à 29, **caractérisé en ce que** la phase liquide est de l'éthanol ou un mélange éthanol/eau.

31. Procédé selon l'une des revendications 22 à 30, **caractérisé en ce que** la pulvérisation de la suspension se fait de telle sorte que des microgouttelettes (32 ; 332) sensiblement sphériques d'un diamètre moyen d50 de 10 à 70 µm sont produites.

32. Procédé selon l'une des revendications 22 ou 23, **caractérisé en ce que** l'étape d'évaporation ou de volatilisation est effectuée tandis que les gouttelettes (32 ; 332) sont déplacées dans une veine de chauffage.

33. Procédé de fabrication d'une poudre selon l'une des revendications 1 à 17, avec des particules de poudre (430) sensiblement sphériques, composées d'un matériau de matrice thermoplastique, dans lesquelles sont éventuellement incorporées des fibres (440) de rigidification et/ou de renforcement, présentant les étapes de procédé suivantes :
a) refroidissement du granulat (450) grossier formé de matière synthétique, éventuellement renforcée par des fibres, au-dessous d'une température à laquelle se produit une fragilisation du matériau de matricé ;
b) broyage du granulat refroidi ; et
c) tamisage du produit broyé, de manière correspondante à un spectre de fraction prédéterminé.

34. Procédé selon la revendication 33, **caractérisé en ce que** l'étape de broyage est effectuée avec un broyeur à pointe (460).

35. Procédé selon la revendication 33 ou 34, **caractérisé en ce que** l'étape de broyage est effectuée lors d'un refroidissement supplémentaire.

36. Procédé selon l'une des revendications 33 à 35, **caractérisé en ce que** l'étape de procédé de tamisage est effectuée en utilisant un séparateur pneumatique (480).

37. Procédé selon l'une des revendications 33 à 36, **caractérisé en ce que** le produit broyé est soumis à un traitement de lissage.

38. Procédé selon la revendication 37, **caractérisé en ce que** le traitement de lissage s'effectue par incorporation ou accumulation de micro- ou nano-particules.

39. Procédé selon la revendication 38, dans lequel le traitement de lissage s'effectue par incorporation ou accumulation d'aérosil.

40. Procédé de fabrication d'une poudre selon l'une des revendications 1 à 21, avec des particules de poudre sensiblement sphériques, composées d'un matériau de matrice, dans lesquelles sont éventuellement incorporées des fibres de rigidification et/ou de renforcement, comprenant les étapes de procédé suivantes :
a) transformation du matériau de matrice en une phase liquide ;
b) éventuellement insertion avec agitation des fibres dans la phase liquide ;
c) soufflage de la phase liquide contenant éventuellement les fibres à travers une buse pour former des gouttelettes contenant éventuellement des fibres ; et
d) guidage des gouttelettes à travers une veine de solidification.

41. Procédé selon la revendication 40, **caractérisé en ce que** la phase liquide est obtenue par mise en fusion du matériau de matrice, et **en ce que** la masse fondue contenant éventuellement les fibres est soufflée et ensuite guidée à travers la veine de refroidissement.

42. Procédé selon la revendication 41, **caractérisé en ce que** la pulvérisation de la masse fondue est effectuée dans un jet de gaz chaud.

43. Procédé selon l'une des revendications 40 à 42, **caractérisé par** l'étape de procédé supplémentaire de tamisage des particules de poudre de manière correspondante à un spectre de fractions prédéterminé.

44. Procédé de préparation de structures ou corps de forme tridimensionnel(le)s au moyen d'un procédé opérant une construction par couches (procédé generative rapid prototyping à base de poudre) en utilisant une poudre selon l'une des revendications 1 à 21.

45. Procédé selon la revendication 44, dans lequel on applique la technologie sélective à frittage au laser ou à fusion au laser comme procédé opérant une construction par couches.

46. Utilisation de la poudre selon l'une des revendications 1 à 21 pour la technologie sélective à frittage au laser ou à fusion au laser.
